# EUROPEAN PATENT SPECIFICATION

(11) **EP 3 790 755 B1**
(45) Date of publication and mention of the grant of the patent: **18.01.2023**
(21) Application number: 19725942.7
(22) Date of filing: 13.05.2019
(51) Int. Cl.: B60K 15/03, B29C 49/20, B29L 31/00

(54) **INTERNAL REINFORCEMENT ELEMENT FOR THERMOPLASTIC TANK**
INTERNES VERSTÄRKUNGSELEMENT FÜR EINEN THERMOPLASTISCHEN TANK
ÉLÉMENT DE RENFORCEMENT INTERNE POUR RÉSERVOIR EN THERMOPLASTIQUE

(30) Priority: 11.05.2018 EP 18171923; 10.08.2018 EP 18188561
(43) Date of publication of application: 17.03.2021
(73) Proprietor: Plastic Omnium Advanced Innovation And Research, 1130 Bruxelles (BE)
(72) Inventor: CHAUSSINAND, Antoine, 1020 BRUXELLES (BE); DUEZ, Laurent, 1180 UCCLE (BE); CRIEL, Bjorn, 1750 SINT-MARTENS-LENNIK (BE)
(74) Representative: LLR
(86) International application number: PCT/EP2019/062242
(87) International publication number: WO 2019/215349

(56) References cited:
- EP-A1- 2 903 847
- EP-B1- 2 903 847
- WO-A1-2012/139962
- WO-A1-2016/078516
- US-A1- 2018 065 475

## Description

### Technical field of the invention

The present invention relates to an internal reinforcement element for a thermoplastic tank, preferably for a thermoplastic fuel tank of a hybrid car. The inventions relates also to a tank comprising the internal reinforcement element and to a method for manufacturing said tank thermoplastic tank.

### Background of the invention

The internal reinforcement element for a thermoplastic tank, preferably for a thermoplastic fuel tank of a hybrid car, consists typically of a pillar or a internal reinforcement element having 2 intermediate units or legs connecting the upper and lower walls of the thermoplastic tank, such as described in EP 2865553 B1. Said internal reinforcement elements are highly resistant to the overpressure and/or to the under-pressure presents inside a pressurized fuel tank relatively to the atmosphere. However, during high energy impact, the breaking constraint of the internal reinforcement element is high. This constraint can generate a stress in the tank above the acceptable limit leading to a tank breaking before the breaking of the internal reinforcement element leading to a possible fuel leakage.

EP2961628 B1 discloses an internal reinforcement element for a thermoplastic tank consisting typically of a pillar comprising 4 segments, said pillar needs to be construed the assembling of the 4 segments and doesn't not have a preferential breaking section. Moreover in case of overpressure, the constraint apply may vary due to the fact that the elements may move independently from each other due to the connection means type between at least two elements.

EP 2897829 B1 discloses an internal reinforcement element for a thermoplastic tank consisting typically of a pillar comprising supporting element designed as a one-piece solid profile which has a ribbed profile, at least in cross section, wherein the supporting element comprises at least two ribs. Said internal reinforcement element is nevertheless too rigid and doesn't not have a preferential breaking section.

Besides, EP2903847B1, US2018065475A1 and WO2012139962A1 disclose internal reinforcement elements in other forms. However, their solutions still do not meet needs.

### Summary of the invention

It is a first object of the present invention to provide an internal reinforcement element for a thermoplastic tank avoiding a potential breaking of the tank under a high energy impact and being in the meantime resisting to over pressure and or under pressure.

It is a second object of the present invention to provide a manufacturing method of an internal reinforcement element for a thermoplastic tank avoiding a potential breaking of the tank under a high energy impact.

It is third object of the present invention to provide a thermoplastic tank comprising an internal reinforcement element and a method for manufacturing a thermoplastic tank comprising an internal reinforcement element.

The invention is defined by the subject-matter of the independent claim 1. Further aspects of the invention form the subject-matter of the dependent claims.

The above objectives are accomplished by an internal reinforcement element for a thermoplastic tank according to the present invention, a thermoplastic tank comprising an internal reinforcement element according to the present invention and a method for manufacturing said thermoplastic tank.

According to a first embodiment of the invention, these objectives are reached with an internal reinforcement element for a thermoplastic tank comprising at least two external parts provided to be welded to the tank wall, said at least two external parts being connected by intermediate units.

According to the invention, the number of intermediate units is equal to n with n being an integer greater or equal to 3, said intermediate units being connected together by less than 40%, preferably less than 30%, more preferably less than 20%, of their sides length and/or faces area.

By the expression, intermediate units being connected together by less than 40%, more preferably less than 30%, preferably less than 20% of their sides length and/or faces area, we intend to mean that the ratio between the length of the mutual sides and the length of the sides is less than 40%, preferably less than 30%, more preferably less than 20%, and/or that the ratio between the mutual faces area and the faces area of the intermediate units faces is less than 40%, preferably less than 30%, more preferably less than 20%.

By the expression "mutual sides length and/or mutual faces area", we intend to mean the length of the sides and/or the surface of the area of the intermediate units which connect two adjacent intermediate units together. Furthermore, by "sides length" and/or "faces area" of the intermediate units, we intend to mean the total length of the sides and/or the total surface of the area of the intermediate units, such a total length or total surface being preferably the length or surface between the ends of the intermediate units to be connected to each external parts.

In other words according to the invention, said intermediate units are separated by openings free of material (or gaps), said openings extending over a distance of more than 60% of the total side lengths and/or faces areas of the intermediate units, preferably more than 70%, more preferably more than 80%.

Thus, for example, considering that two intermediate units are connected over 40% of their respective lengths is equivalent to consider that their "mutual sides length" is equal to 40% of their respective total lengths, and that an opening between them (the gap) extends over 60% of their respective total lengths.

The same reasoning applies to the mutual faces of two adjacent intermediate units with respect to their overall faces areas. Thus, for example, considering that two intermediate units are connected over 40% of their respective faces area is equivalent to consider that their "mutual faces area" is equal to 40% of their respective total faces area, and that the opening between them (the gap) extends over 60% of their respective faces area.

The terms "external parts" are usually intended to be read as "end parts" of the reinforcement element to be welded on the tank wall.

The inventors have surprisingly noted that an internal reinforcement element for a thermoplastic tank having n intermediate units with n being an integer greater or equal to 3 allows a better repartition of the mechanical stress generated by the pressure variation inside the thermoplastic tank, preferably the fuel thermoplastic tank, relatively to the atmospheric pressure on the tank between the 2 externals parts without decreasing the total acceptable constraint level on the internal reinforcement element. Moreover, the presence of n intermediate units instead of one or two intermediate units allows an individual breaking constraint level for each intermediate unit which is lower leading advantageously an earlier releasing of the stress on the tank during high energy impact. Finally, an internal reinforcement element for a thermoplastic tank comprising at least two external parts provided to be welded to the tank wall, said at least two external parts being connected by intermediate units, said intermediate units being connected together by less than 30%, preferably less than 20% of their sides length and/or faces area permits to obtain an internal reinforcement element less rigid.

According to a preferred embodiment of the invention, the internal reinforcement element for a thermoplastic tank according is such that the largest dimension of the section of at least one of the intermediate units, preferably all the intermediate units, varies more than 50%, preferably more than 70% along the distance between the extremities of the intermediate units, said extremities being provided to be connected to the at least two external parts. Preferably, the largest dimension of the section of the intermediate units is located on the top and on the bottom parts of the intermediate units. By the expression "the top and on the bottom parts of the intermediate units", we intend to mean that the part of the intermediate unit near the external parts. More preferably, the intermediate units have a blade shape.

The inventors have surprisingly noted that a largest dimension of the section of the intermediate units which varies more than 50%, preferably more than 70% between the extremities of the intermediate units improves the control of the acceptable constraint in the intermediate unit during durability and the location of break during high energy impact. By the expression "the intermediate units have a blade shape", we intend to mean that the intermediate units has a design with a variable section like a two dimensional diabolo, the lowest section in the blade shape defines the acceptable constraint in the intermediate unit during durability and the location of break (weak point) during high energy impact.

According to the invention, the interna reinforcement element for a thermoplastic tank comprises is such that the ratio between the smallest section area of at least one of the intermediate units and the area of at least one external part provided to be in contact with the tank wall is comprised between 0.05% and 3%, preferably between 0,05% and 2%, more preferably between 0,05% and 1%.

The inventors have surprisingly noted that such a ratio guaranties that the area of smallest section area of the intermediate unit meets an acceptable constraint level to break easily during high energy impact regarding the complete surface of contact between the reinforcement element and the tank walls.

More specifically, such a ratio is likely to satisfy the need to easily and quickly break the reinforcement element in case of high energy impact (i.e. a crash) while well resisting to loads on the fuel tank walls due to over pressure or under pressure, in the case of normal use of the tank.

The inventors have also noted that a ratio between 0,05% and 0,6%, for example, is quite good to guaranty that the area of smallest section area of the intermediate unit meets an acceptable constraint level to break easily during high energy impact regarding the complete surface of contact between the reinforcement element and the tank walls.

According to a particular embodiment of the invention, the internal reinforcement element for a thermoplastic tank is such that the ratio between the smallest section area of at least one of the intermediate units and the area of at least one external part provided to be welded to the tank wall is comprised between 0.1% and 10%, preferably between 0.1% and 5%. By the expression "the area of at least one external part provided to be welded to the tank wall", we intend to mean the surface area of the external part which is used to perform the welding of said external part to the tank wall.

The inventors have surprisingly noted that such a ratio guaranties that the area of smallest section area of the intermediate unit meets an acceptable constraint level to break easily during high energy impact taking into account the surface of the internal reinforcement element provided to be welded on the tank shell.

According to a particular embodiment of the invention, the internal reinforcement element for a thermoplastic tank is such that the intermediate units may have more than one lowest section (many weak points) in a blade shape, thus defining many locations for a break.

According to a particular embodiment of the invention, the internal reinforcement element for a thermoplastic tank is such that the distance between two adjacent intermediate units is constant. By the expression "the distance between two adjacent intermediate units", we intend to mean the distance between the longitudinal axes of the intermediate units.

The inventors have surprisingly noted that a constant distance between two adjacent intermediate units along the complete length of the at least two external parts of the internal reinforcement element allows a better repartition of the constraints inside the different intermediate units. The calculation of the smallest section area of the intermediate unit is simplified. The maximum constraints apply on the extremities of the internal reinforcement element are reduced.

According to another particular embodiment of the invention, the internal reinforcement element for a thermoplastic tank is such that the distance between two adjacent intermediate units is variable.

In a particular embodiment of the invention, the internal reinforcement element for a thermoplastic tank is such that the distance between two adjacent intermediate units increases with the distance starting from the extremities of the internal reinforcement element. In other words, the distance between two adjacent intermediate units located at the periphery of the internal reinforcement element is higher than the distance between two adjacent intermediate units located at the centre of the internal reinforcement element. The inventors have surprisingly noted that it allows managing higher constraint from the tank shell deformation due to internal tank pressure.

In another particular embodiment of the invention, the internal reinforcement element for a thermoplastic tank is such that the distance between two adjacent intermediate units decreases with the distance starting from the extremities of the internal reinforcement element. In other words, the distance between two adjacent intermediate units located at the periphery of the internal reinforcement element is smaller than the distance between two adjacent intermediate units located at the center of the internal reinforcement element. The inventors have surprisingly noted that it allows managing higher constraint from the tank shell deformation due to internal tank pressure when said constraint is higher on the extremities of the internal reinforcement element. According to a preferred embodiment, the internal reinforcement element for a thermoplastic tank is such that the smallest angle between the axis defined by the intersection of a first plan comprising the largest dimension of the section of at least one intermediate unit, said plan being perpendicular to the section area of said intermediate unit, and a second plan defined by a section area of at least one external part, and the axis defined by the smallest dimension of the section of at least one external part is comprised between 0° and 45°. The inventors have surprisingly noted that an angle comprised between 0° and 45° between an axis defined by the intersection of a first plan comprising the largest dimension of the section of at least one intermediate unit, said plan being perpendicular to the section area of said intermediate unit, and a second plan defined by a section area of at least one external part,and the axis defined by the smallest dimension of the section of at least one external part reduces the flexural stress visible inside the internal units during durability especially in compression mode (when the tank has a negative pressure).

According to an alternative to the previous embodiment, the internal reinforcement element for a thermoplastic tank is such that the intersection axis of a first plan comprising the largest dimension of the section of at least one intermediate unit and a second plan comprising the smallest dimension of the section of at least one external part, the first plan and the second plan being perpendicular, and the smallest dimension of the section of at least one external part are parallel.

The inventors have surprisingly noted that a constant orientation of the largest dimension of the section of at least one intermediate unit and the smallest dimension of the section of the external part reduces the flexural stress visible inside the internal units during durability especially in compression mode (when the tank has a negative pressure).

According to a particular embodiment, the internal reinforcement element for a thermoplastic tank according to the invention is such that the intersection axis of a first plan comprising the largest dimension of the section of at least one intermediate unit and a second plan comprising the smallest dimension of the section of at least one external part, the first plan and the second plan being perpendicular, and the smallest dimension of the section of at least one external part are perpendicular.

The inventors have surprisingly noted that a perpendicular orientation of the intersection axis of a first plan comprising the largest dimension of the section of at least one intermediate unit and a second plan comprising the smallest dimension of the section of at least one external part, the first plan and the second plan being perpendicular, and the smallest dimension of the section of the external part slows down the breaking propagation of the successive intermediate units during high energy impact.

According to a preferred embodiment of the invention, the internal reinforcement element for a thermoplastic tank is such that the location of smallest section area of the intermediate unit in height varies from one unit to the other. By the term "height", we intend to mean the distance between the smallest section area of the intermediate unit and the face of the external part provided to be welded to the bottom wall of the tank, in other words to be in contact with the bottom wall of the tank.

According to a particular embodiment of the invention, the internal reinforcement element for a thermoplastic tank is such that the location of smallest section area of the intermediate unit in height varies randomly from one unit to the other.

The inventors have surprisingly noted that an internal reinforcement element having a hazardous repartition of the location of the smallest section area of the intermediate unit in height permits to reduce the constraints generated on the different intermediate units by the pressure variation inside the tank. It will also slow down the breaking propagation of the successive intermediate units during high energy impact.

According to another particular embodiment of the invention, the internal reinforcement element for a thermoplastic tank is such that the location of smallest dimension of the section area of the intermediate units in height increases or decreases continuously from one unit to the other.

The inventors have surprisingly noted that an oblique alignment of the location of the smallest section area of the intermediate units in height will accelerate or slow down the breaking propagation of the successive intermediate units during high energy impact.

According to a preferred embodiment, of the invention the internal reinforcement element for a thermoplastic tank is such that the thickness of at least one intermediate unit is at least equal to 0.7 mm. The thickness can be the same for all the intermediate units. By the term "thickness", we intend to mean the dimension of smallest measure between two surfaces of the intermediate unit. But the thickness can be adapted in function of the stress generated by the tank deformation during overpressure and underpressure situation. In such a case, the thickness of the intermediate units is increased preferably on the external intermediate units. By the expression "the external intermediate units", we intend to mean the intermediate unit located on the extremities of the at least two external parts.The length of an intermediate unit is defined by the tank shape. This could lead to different lengths of intermediate units along the internal reinforcement element.

According to a preferred embodiment of the invention, the internal reinforcement element for a thermoplastic tank is such that the at least n intermediate units and at one of the at least two external parts, preferably the at least two external part, are made of different material. Preferably, the intermediate units are made of a material selected from the group consisting of polyoxymethylene (POM), preferably a fiber reinforced POM, such as a glass fiber and/or aramid carbon reinforced POM, Polyphenylene sulfide (PPS), Polyphthalamide (PPA), preferably a fiber reinforced PPA, Polyether ether ketone (PEEK), Polyamide-imide (PAI), Polyaryletherketone (PAEK), Polyketone (PK) and metal such as stainless steel. More preferably, the intermediate units are made of Polyphthalamide (PPA), preferably a fiber reinforced PPA. Preferably, the at least two external parts are made of a material selected from the group consisting of a polyethylene material or a polyamide material, preferably fibers reinforced.

According to a preferred embodiment, the internal reinforcement element for a thermoplastic tank is such that the at least n intermediate units are overmolded by at least one of the at least two external parts, said at least n intermediate units comprising at least one through hole at their extremities provided to receive a melded part of the at least one of at least two external parts creating a mechanic link between the at least n intermediate units and the at least one of at least two external parts.

According to the invention, the internal reinforcement element for a thermoplastic tank is such that at least two of the n intermediate units preferably all the n intermediate units, are solidarized by at least one connecting means located at the extremities of the at least two of the n intermediate units, preferably all the n intermediate units, and between the extremities of the at least two of the n intermediate units, preferably all the n intermediate units, and at least one of the at least two external parts. The at least two of the n intermediate units, more preferably all the n intermediate units, and the at least one connecting means constitute a monoblock structure. The at least one connecting means is located on the same side of all the extremities of the n intermediate units. More preferably, the internal reinforcement element for a thermoplastic tank is such that the n intermediate units are solidarized by two connecting means located on both sides of the extremities of the at least n intermediate units. Preferably, the at least one connecting means is made of a material selected from the group consisting of polyoxymethylene (POM), preferably a fiber reinforced POM, such as a glass fiber and/or aramid carbon reinforced POM, Polyphenylene sulfide (PPS), Polyphthalamide (PPA), preferably a fiber reinforced PPA, Polyether ether ketone (PEEK), Polyamide-imide (PAI), Polyaryletherketone (PAEK) and metal such as stainless steel. Preferably, the intermediate units are made of Polyphthalamide (PPA), preferably a fiber reinforced PPA. More preferably, the at least one connecting means is made of a material selected from the group consisting of a polyethylene material or a polyamide material, preferably fibers reinforced. Preferably, the at least one connecting means comprises at least one through hole, preferably a plurality of through holes, provided to receive a melded part of the at least two external parts creating a mechanic link between the at least one connecting means and at least two external parts. More preferably, the at least two of the n intermediate units and each connecting means located on both sides of said the at least two of the n intermediate units, preferably all the n intermediate units, constitute a monoblock structure.

According to an embodiment of the internal reinforcement element for a thermoplastic tank is such that the tensile strength of the material in which at least one of the at least n intermediate units, preferably all the n intermediate units, are made exceeds the yield stress of the material of at least one of the at least two external parts, preferably the at least two external part, by a factor comprised in the range of 2.6 to 8.0, preferably from 3.0 to 8.0. Tensile strength and yield stress can be determined in particular according to DIN EN ISO 527, said determination being performed at room temperature. By the expression "room temperature", we intend to mean a temperature comprised in the range of 20°C to 25°C, preferably around 23°C.

According to a preferred embodiment, the internal reinforcement element for a thermoplastic tank according to the invention is such that the shape of the face of the at least one external part provided to be welded to the tank wall is selected from the group consisting of a circle, a rectangle, a square or a surface comprising two concentric arcs.

According to other embodiments, the intermediate units have other transversal section profiles. More particularly, the intermediate units may have at least one transversal section profile selected from the group of profiles comprising a "T"-shaped profile, a "U"-shaped profile, a "X"-shaped profile, a "+"- shaped profile, a "Y"-shaped profile, a "V"-shaped profile, a "W'-shaped profile, a "H"-shaped profile, a "Z"-shaped profile. Said intermediate units may have several weak points. Thus, the intermediate unit can be strengthened even if it has a very small section. On a same reinforcement element, the transversal section profile of the intermediate units can vary from one intermediate unit to another one.

On a particularly interesting embodiment, the transversal section profile of the intermediate units can vary on a same intermediate unit, along its length. It is thus easier to define the breaking points of the reinforcement element when subjected to abnormally high loads such as in case of high energy impact (i.e. a crash). Or else, a break of the intermediate unit is more likely to occur when a constraint is applied in a given direction compared to a stress applied in a direction other than the given direction. For example, on a same intermediate unit, there is the combination of a plane section and one transversal section profile selected from the group of profiles comprising a "T"-shaped profile, a "U"-shaped profile, a "X"- shaped profile, a "+"-shaped profile, a "Y"-shaped profile, a "V"-shaped profile, a "W"-shaped profile, a "H"-shaped profile, a "Z"-shaped profile. In such cases, the plane section can be a reliable breaking point (weak point) of the intermediate unit.

A second object to the invention is to provide a method for manufacturing the internal reinforcement element according to the invention. Said method comprises a step of injection molding of n intermediate units with n being an integer greater or equal to 3 and a step of overmoulding of at least one external part on the at least n intermediate units. Preferably, the step of injection molding is a step of injection molding of a monoblock structure comprising n intermediate units with n being an integer greater or equal to 3 and at least one connecting means located on the same side of all the extremities of the n intermediate units. Preferably, the monoblock structure comprises n intermediate units with n being an integer greater or equal to 3 and two connecting means located on the both sides of the n intermediate units. When the step of injection molding is a step of injection molding of a monoblock structure, the step of overmoulding of at least one external part is performed on the connecting means connecting at least two of the at least n intermediate units, preferably on the connecting means connecting the at least n intermediate units.

A third object to the invention is to provide a thermoplastic tank comprising the internal reinforcement element according to the invention and a method for manufacturing said tank.

According to a preferred embodiment of the invention, the method for manufacturing a tank comprising the internal reinforcement element according to the invention comprises the step of fixing the internal reinforcement element on at least one wall of the thermoplastic tank, preferably on the bottom and top walls of the tank. Preferably the step of fixing the internal reinforcement element on at least one wall of the thermoplastic tank, preferably on the bottom and top walls of the tank, is a step of welding.

Features from the dependent claims may be combined with features of the independent claim and with features of other dependent claims as appropriate and as defined in the appended claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention, which is limited only by the scope of the appended claims.

The reference figures quoted below refer to the attached drawings.

### Brief description of the drawings

Fig. 1 is an illustration of an internal reinforcement element for a thermoplastic tank according toi the prior art
Fig. 2 is an illustration of a first embodiment of an internal reinforcement element for a thermoplastic tank according to the invention.
Fig. 3 is an illustration of a second embodiment of an internal reinforcement element for a thermoplastic tank according to the invention.
Fig. 4 is another illustration of the second embodiment of an internal reinforcement element for a thermoplastic tank according to the invention.
Fig. 5 is an illustration of a second embodiment of an internal reinforcement element for a thermoplastic tank according to the invention of show a combination of perpendicular and parallel intermediate units.
Fig. 6 is a sectional illustration of several possible designs of intermediate units in an internal reinforcement element for a thermoplastic tank according to the invention.
Fig. 7 a and b are respectively an illustration of a high energy impact (i.e. a crash) test simulation performed on an internal reinforcement element for a thermoplastic tank according to the prior art (a) and according to the invention (b).
Fig. 8 is an illustration of a first embodiment of an internal reinforcement element for a thermoplastic tank according to the invention, as on Fig. 2 with some additional information regarding the orientation and shapes of the intermediate units.
Fig. 9 is an illustration of a variant of an embodiment of an internal reinforcement element for a thermoplastic tank according to the invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in an appropriate manner and as defined in the appended claims.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in a combination as defined in the appended claims.

In the description provided herein, numerous specific details are set forth. However, it is understood that embodiments of the invention may be practiced without these specific details. In other instances, well-known methods, structures and techniques have not been shown in detail in order not to obscure an understanding of this description.

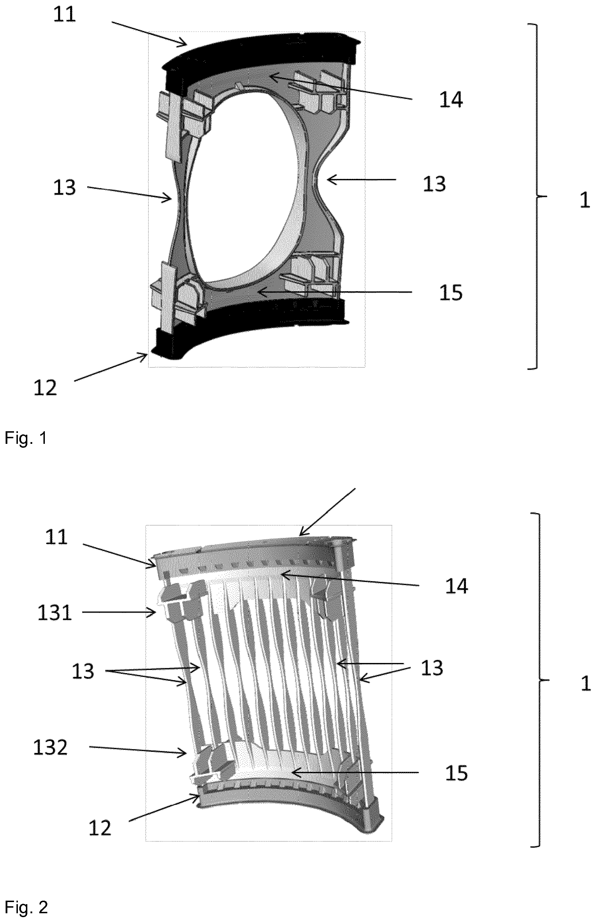

Fig. 1 shows an internal reinforcement element (1) for a thermoplastic tank according to the prior art. Said internal reinforcement element consisting of two external parts (11, 12) provided to be welded to the tank wall, said at least two external parts being connected by two intermediate units (13) connected together with two connecting means (14, 15) constituting a monoblock structure.

Fig. 2 shows an internal reinforcement element (1) for a thermoplastic tank according to the invention said internal reinforcing element comprising at least two external parts (11, 12) provided to be welded to the tank wall, said at least two external parts being connected by at least n intermediate units (13) with n being an integer greater or equal to 3, wherein the largest dimension of the section of at least one of the intermediate units (13) varies more than 50%, preferably more than 70% between the extremities (131, 132) of the intermediate units (13), said at least n intermediate units having a blade shape, in other words the shape of the intermediate units is a design with a variable section like a two dimensional diabolo. Said intermediate units (13) are connected together by less than 40%, preferably less than 30%, more preferably less than 20%, of their sides length. All the n intermediate units are solidarized by two connecting means (14, 15) located at the extremities of the n intermediate units and between the extremities of n intermediate units and the two external parts (11, 12). The n intermediate units (13) and the two connecting means (14, 15) constitute a monoblock structure, in other words a structure made in one piece. The two external parts provided to be welded to the tank wall comprise a plurality of ribs (110) which will be melted during the fixing step of the internal reinforcement element to the wall of the tank. The two connecting means comprise at least one through hole, preferably a plurality of through holes, (not shown) provided to receive a melded part of the at least two external parts creating a mechanic link between the at least one connecting means and at least two external parts. The n intermediate units (13) are made of PPA, the connecting means are made of PPA and the external parts are made of HDPE. The two external parts provided to be welded to the tank wall comprise a plurality of ribs (110) which will be melted during the fixing step of the internal reinforcement element to the wall of the tank.

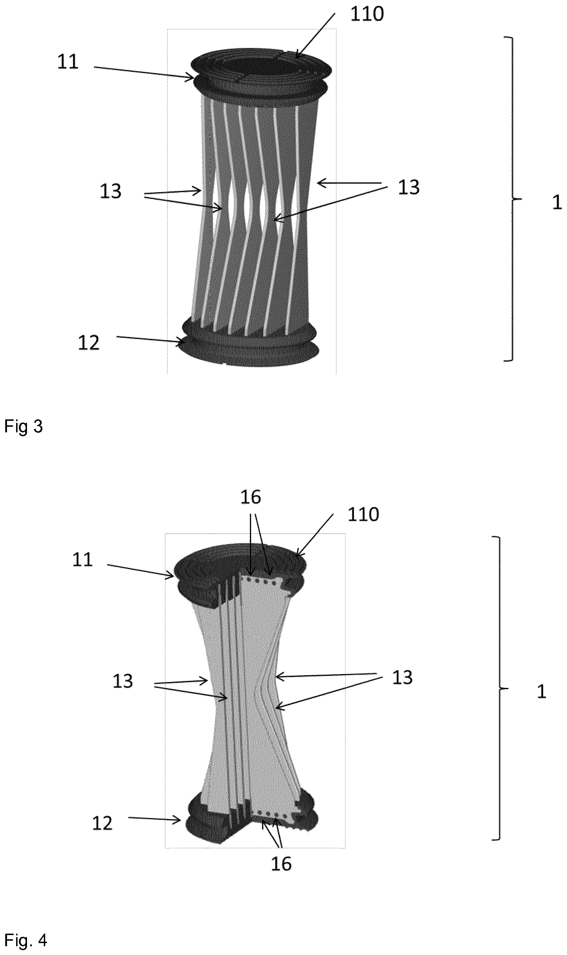

Fig. 3 and 4 show an internal reinforcement element (1) for a thermoplastic tank according to the invention, said internal reinforcing element comprising at least two external parts (11, 12) provided to be welded to the tank wall, said at least two external parts (11, 12) being connected by at least n intermediate units (13) with n being an integer greater or equal to 3, said at least n intermediate units having a blade shape, in other words the shape of the intermediate units is a design with a variable section like a two dimensional diabolo. The two external parts provided to be welded to the tank wall comprise a plurality of ribs (110) which will be melted during the fixing step of the internal reinforcement element to the wall of the tank The n intermediate units are overmolded by the two external parts, said at least n intermediate units comprising at least one through hole (16) at their extremities provided to receive a melded part of the at least two external parts creating a mechanic link between the at least n intermediate units (13) and at least two external parts (11, 12).

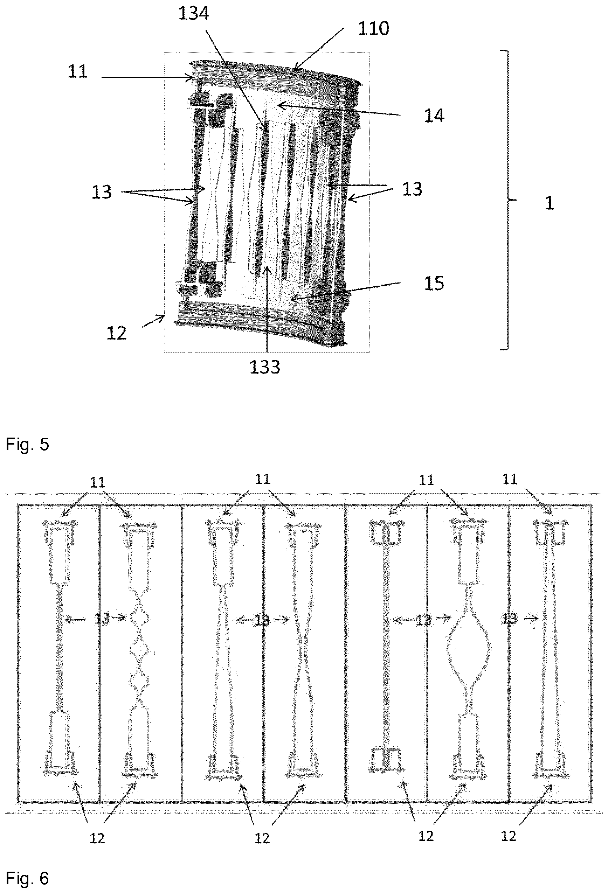

Fig. 5 shows an internal reinforcement element (1) for a thermoplastic tank according to the invention. Said an internal reinforcement element comprises at least two external parts (11, 12) provided to be welded to the tank wall, said at least two external parts (11, 12) being connected by at least n intermediate units (13) with n being an integer greater or equal to 3, said at least n intermediate units having a blade shape. The blade shape intermediate units are such that the intersection axis of a first plan comprising the largest dimension of the section of at least one intermediate unit (13) and a second plan comprising the smallest dimension of the section of at least one external part (11, 12), the first plan and the second plan being perpendicular, and the smallest dimension of the section of at least one external part (11, 12) are perpendicular (133) or parallel (134).

Fig 6 shows sectional view of several possible designs of intermediate units (13) in an internal reinforcement element for a thermoplastic tank according to the invention. Said intermediate units (13) are overmolded by two external parts (11, 12). Said intermediate units (13) may comprise at least one through hole at their extremities, not shown on the figure) provided to receive a melded part of two external parts (11, 12) creating a mechanic link between the intermediate units (13) and the two external parts (11, 12).

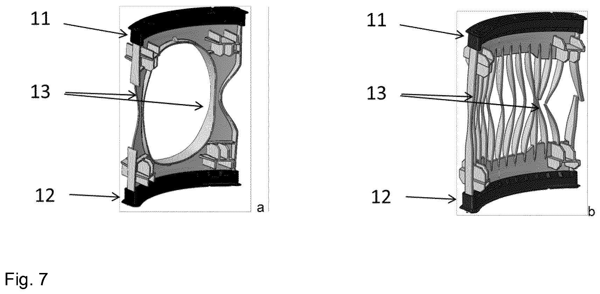

Fig 7 a and b are respectively an illustration of the result of a high energy impact (i.e. a crash) test simulation performed on an internal reinforcement element for a thermoplastic tank according to the prior art (a) and according to the invention (b). The simulations are simulated, on Dassault Systemes SIMULIA ABASQUS CAE 6.14. The simulations are performed taking into account a high energy impact on a tank which integrates the internal reinforcement element according to the invention (a) and on a tank which integrates the internal reinforcement element according to the prior art. For these simulations, the internal reinforcement element according to the invention (a) comprises 13 intermediate units (13), wherein:
- the ratio between the smallest section area of the external intermediate units (13) and the area of at least one external part (11, 12) provided to be in contact with the tank wall is at 0,40%,
- the ratio between the lowest section area of the non-external intermediate units (13) and the area of at least one external part (11, 12) provided to be in contact with the tank wall is at 0,10%,

The internal reinforcement element according to the prior art (a) comprises 2 intermediate units (13) wherein:
- the ratio between the lowest section area of the intermediate units (13) and the area of at least one external part (11, 12) provided to be in contact with the tank wall is at 1,2%,
The simulations show that the energy needed to initiate the breaking of the internal reinforcement element due to an impact on the tank is reduced by 1000 Joules by using the internal reinforcement element according to the invention.

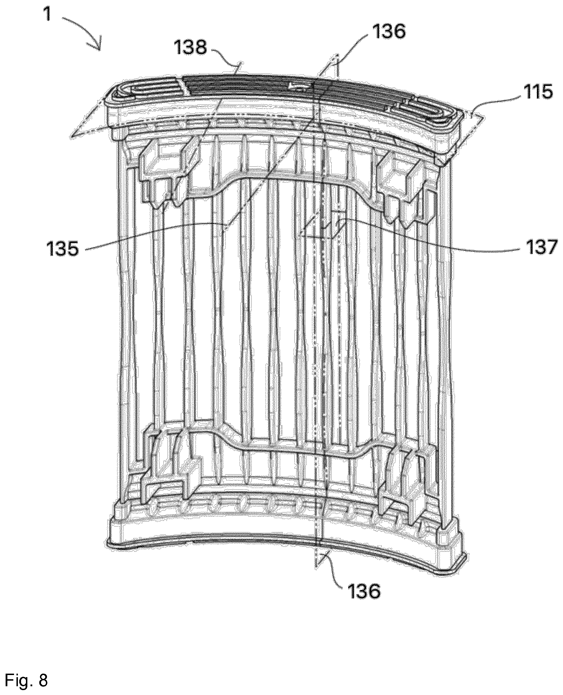

Fig. 8 is an illustration of a first embodiment of an internal reinforcement element for a thermoplastic tank according to the invention, as on Fig. 2 with some additional information regarding the orientation and shapes of the intermediate units (13). Fig. 8 shows a first axis (135) defined by the intersection of a first plan (136) comprising the largest dimension of the section of at least one intermediate unit (13), said plan (136) being perpendicular to the section area (137) of said intermediate unit (13), and a second plan (115) defined by a section area of at least one external part (11,12), and a second axis (138) defined by the smallest dimension of the section of at least one external part (11, 12). Said first (135) and second (138) axis make references to describe the orientations and shapes of the intermediate units (13) according to some abovecited embodiments of the invention.

According to other embodiments, the intermediate units (13) may have at least one transversal section profile selected from the group of profiles comprising a "T"-shaped profile, a "U"-shaped profile, a "X"-shaped profile, a "+"-shaped profile, a "Y"-shaped profile, a "V"-shaped profile, a "W'-shaped profile, a "H"-shaped profile, a "Z"-shaped profile.

In particular, the transversal section profile of the intermediate units (13) can vary on a same intermediate unit (13), along its length. Thus, the parts (portions) of an intermediate unit (13) which are closest to the external parts (11,12) may for example have a transversal section profile which is a "T"-shaped profile, and a central portion of the same intermediate unit (13) may have a plane section, so that a break of the intermediate unit (13) is more likely to occur in the central portion.

The intermediates units (13) may have one or more transversal section profile variations depending over their length.

Such transversal section profile variations of the intermediate units may be disrupted or gradual.

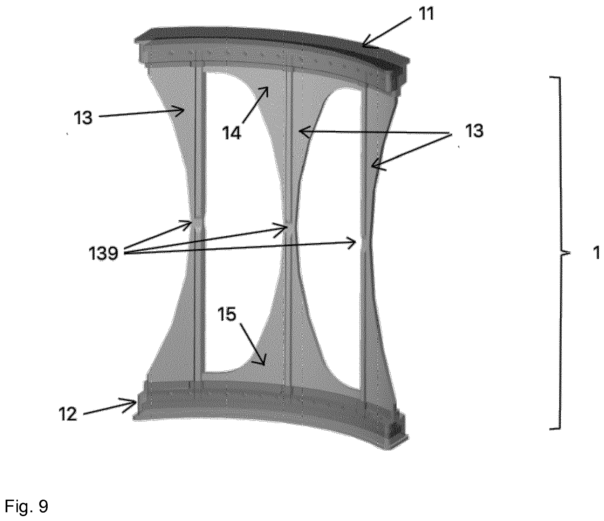

By way of example, Fig. 9 shows an internal reinforcement element (1) for a thermoplastic tank according to the invention, said internal reinforcing element (1) comprising at least two external parts (11, 12) provided to be welded to the tank wall, said at least two external parts (11, 12) being connected by at least n intermediate units (13) with n being an integer greater or equal to 3. Said intermediates units (13) being connected together with two connecting means (14, 15) constituting a monoblock structure and said at least n intermediate units (13) having a "T"-shaped transversal section profile, different from a plane section, close to the external parts (11, 12), and at least one of the intermediate units having a variable section so that a central portion of the intermediate unit (13) may have a plane profile.

According to the same principle, some corresponding configurations of the intermediate units (13) may have a first transversal section profile in the shape of "X", "+", "Y", "H", "U", "V", "W" or "Z" for instance, preferably close to the external parts (11, 12), and a second transversal section profile shape in a central part (or portion), in the form of one or more plane sections.

The terms "central part" are intended to be read as not contiguous to an external part (11,12) or, for a portion of intermediate unit with a given first transversal section profile shape, between two portions of the same intermediate unit which have both a same second transversal section profile shape.

Advantageously, the intermediate units (13) having such a variation of their transversal section profile make weak points (139) so that it is thus easier to define the levels and application directions of the constraints (forces) or stress loads for which the reinforcement element (1) will break when subjected to abnormally high loads such as in case of a high energy impact (i.e. a crash), for example.

## Claims

1. An internal reinforcement element (1) for a thermoplastic tank comprising at least two external parts (11, 12) provided to be welded to the tank wall, said at least two external parts (11, 12) being connected by at least n intermediate units (13) with n being an integer greater or equal to 3, wherein said intermediate units (13) are connected together by less than 40%, preferably less than 30%, more preferably less than 20%, of their sides length and/or faces area, **characterized in that** the ratio between the smallest section area of at least one of the intermediate units (13) and the area of at least one external part (11, 12) provided to be in contact with the tank wall is comprised between 0.05% and 3%, preferably between 0,05% and 2%, more preferably between 0,05% and 1%, and **in that** at least two of the n intermediate units (13) are solidarized by at least one connecting means (15) located at the extremities of the at least two of the n intermediate units (13) and between the extremities of the at least two of the n intermediate units (13) and at least one of the at least two external parts (11, 12), preferably the at least two of the n intermediate units (13) and the at least one connecting means (15) constitute a monoblock structure.

2. The internal reinforcement element (1) for a thermoplastic tank according to claim 1, wherein the largest dimension of the section of at least one of the intermediate units (13) varies more than 50%, preferably more than 70% between the extremities (131, 132) of the intermediate units (13).

3. The internal reinforcement element (1) for a thermoplastic tank according to anyone of the preceding claims, wherein the distance between two adjacent intermediate units (13) is constant.

4. The internal reinforcement element (1) for a thermoplastic tank according to claims 1 or 2, wherein the distance between two adjacent intermediate units (13) is variable.

5. The internal reinforcement element (1) for a thermoplastic tank according to anyone of the preceding claims, wherein the smallest angle between the axis (135) defined by the intersection of a first plan (136) comprising the largest dimension of the section of at least one intermediate unit, said plan (136) being perpendicular to the section area (137) of said intermediate unit, and a second plan (115) defined by a section area of at least one external part, and the axis (138) defined by the smallest dimension of the section of at least one external part is comprised between 0° and 45°.

6. The internal reinforcement element (1) for a thermoplastic tank according to any one of the claim 1 to 4, wherein intersection axis of a first plan (136) comprising the largest dimension of the section of at least one intermediate unit (13) and a second plan (115) comprising the smallest dimension (138) of the section of at least one external part (11, 12), the first plan (136) and the second plan (115) being perpendicular, and the smallest dimension (138) of the section of at least one external part (11, 12) are parallel.

7. The internal reinforcement element (1) for a thermoplastic tank according to any one of the claim 1 to 4, wherein the intersection axis of a first plan (136) comprising the largest dimension of the section of at least one intermediate unit (13) and a second plan (115) comprising the smallest dimension (138) of the section of at least one external part (11, 12), the first plan (136) and the second (115) plan being perpendicular, and the smallest dimension (138) of the section of at least one external part (11, 12) are perpendicular.

8. The internal reinforcement element (1) for a thermoplastic tank according to any one of claims 1 to 7, wherein the location of smallest section area of the intermediate unit (13) in height varies from one unit to the other.

9. The internal reinforcement element for a thermoplastic tank according to claims 8, wherein the location of smallest section area of the intermediate unit (13) in height varies randomly from one unit to the other.

10. The internal reinforcement element for a thermoplastic tank according to claims 8, wherein the location of smallest section area of the intermediate unit (13) in height increases or decreases continuously from one intermediate unit (13) to the other.

11. The internal reinforcement element (1) for a thermoplastic tank according to any one of the preceding claims, wherein the thickness of the intermediate unit (13) is at least equal to 0.7 mm.

12. The internal reinforcement element for a thermoplastic tank according to any one of the preceding claims, wherein the at least n intermediate units (13) and at least one of the at least two external parts (11, 12) are made of different material.

13. The internal reinforcement element (1) for a thermoplastic tank according to the preceding claim, wherein the at least n intermediate units (13) are overmolded by at least one of the at least two external parts (11, 12), said at least n intermediate units (13) comprising at least one through hole (16) at their extremities provided to receive a melded part of the at least two external parts (11, 12) creating a mechanic link between the at least n intermediate units (13) and at least two external parts (11, 12).

14. A thermoplastic tank comprising the internal reinforcement element according to any one of the preceding claims.

15. A method for manufacturing the internal reinforcement element according to any one of claims 1 to 13, said method comprising a step of injection molding of n intermediate units with n being an integer greater or equal to 3 and a step of overmoulding of at least one external part on the at least n intermediate units.

16. A method for manufacturing a thermoplastic tank comprising the internal reinforcement element according to any one of claims 1 to 13, said method comprises a step of fixing the internal reinforcement element on at least one wall of the thermoplastic tank.

## Patentansprüche

1. Internes Verstärkungselement (1) für einen thermoplastischen Tank, das mindestens zwei äußere Teile (11, 12) aufweist, die dazu vorgesehen sind, mit der Tankwand verschweißt zu werden, wobei die mindestens zwei äußeren Teile (11, 12) durch mindestens n Zwischeneinheiten (13) verbunden sind, wobei n eine ganze Zahl größer oder gleich 3 ist, wobei die Zwischeneinheiten (13) über weniger als 40 %, vorzugsweise weniger als 30 %, noch bevorzugter weniger als 20 %, ihrer Seitenlängen und/oder Flächen miteinander verbunden sind, **dadurch gekennzeichnet, dass** das Verhältnis zwischen der kleinsten Querschnittsfläche mindestens einer der Zwischeneinheiten (13) und der Fläche mindestens eines äußeren Teils (11, 12), das dazu vorgesehen ist, mit der Tankwand in Kontakt zu sein, zwischen 0.05 % und 3 %, vorzugsweise zwischen 0,05 % und 2 %, noch bevorzugter zwischen 0,05 % und 1 % liegt, und dass mindestens zwei der n Zwischeneinheiten (13) durch mindestens ein Verbindungsmittel (15), das sich an den Enden der mindestens zwei der n Zwischeneinheiten (13) und zwischen den Enden der mindestens zwei der n Zwischeneinheiten (13) und mindestens einem der mindestens zwei äußeren Teile (11, 12) befindet, wobei vorzugsweise die mindestens zwei der n Zwischeneinheiten (13) und das mindestens eine Verbindungsmittel (15) eine Monoblockstruktur bilden.

2. Internes Verstärkungselement (1) für einen thermoplastischen Tank nach Anspruch 1, wobei die größte Abmessung des Querschnitts von mindestens einer der Zwischeneinheiten (13) um mehr als 50 %, vorzugsweise um mehr als 70 %, zwischen den Enden (131, 132) der Zwischeneinheiten (13) variiert.

3. Internes Verstärkungselement (1) für einen thermoplastischen Tank nach einem der vorhergehenden Ansprüche, wobei der Abstand zwischen zwei benachbarten Zwischeneinheiten (13) konstant ist.

4. Internes Verstärkungselement (1) für einen thermoplastischen Tank nach Anspruch 1 oder 2, wobei der Abstand zwischen zwei benachbarten Zwischeneinheiten (13) variabel ist.

5. Internes Verstärkungselement (1) für einen thermoplastischen Tank nach einem der vorhergehenden Ansprüche, wobei der kleinste Winkel zwischen der Achse (135), die durch den Schnittpunkt einer ersten Ebene (136), die die größte Abmessung des Querschnitts mindestens einer Zwischeneinheit aufweist, wobei die Ebene (136) senkrecht zu der Querschnittsfläche (137) der Zwischeneinheit ist, und einer zweiten Ebene (115), die durch eine Querschnittsfläche mindestens eines äußeren Teils definiert ist, und der Achse (138), die durch die kleinste Abmessung des Querschnitts mindestens eines äußeren Teils definiert ist, zwischen 0° und 45° liegt.

6. Internes Verstärkungselement (1) für einen thermoplastischen Tank nach einem der Ansprüche 1 bis 4, wobei die Schnittachsen einer ersten Ebene (136), die die größte Abmessung des Querschnitts mindestens einer Zwischeneinheit (13) aufweist, und einer zweiten Ebene (115), die die kleinste Abmessung (138) des Querschnitts mindestens eines äußeren Teils (11, 12) aufweist, wobei die erste Ebene (136) und die zweite Ebene (115) senkrecht sind, und die kleinste Abmessung (138) des Querschnitts mindestens eines äußeren Teils (11, 12) parallel sind.

7. Internes Verstärkungselement (1) für einen thermoplastischen Tank nach einem der Ansprüche 1 bis 4, wobei die Schnittachse einer ersten Ebene (136), die die größte Abmessung des Querschnitts mindestens einer Zwischeneinheit (13) aufweist, und einer zweiten Ebene (115), die die kleinste Abmessung (138) des Querschnitts mindestens eines äußeren Teils (11, 12) aufweist, wobei die erste Ebene (136) und die zweite Ebene (115) senkrecht sind, und die kleinste Abmessung (138) des Querschnitts mindestens eines äußeren Teils (11, 12) senkrecht sind.

8. Internes Verstärkungselement (1) für einen thermoplastischen Tank nach einem der Ansprüche 1 bis 7, wobei die Lage der kleinsten Querschnittsfläche der Zwischeneinheit (13) in der Höhe von einer Einheit zur anderen variiert.

9. Internes Verstärkungselement für einen thermoplastischen Tank nach Anspruch 8, wobei die Lage der kleinsten Querschnittsfläche der Zwischeneinheit (13) in der Höhe von einer Einheit zur anderen zufällig variiert.

10. Internes Verstärkungselement für einen Thermoplasttank nach Anspruch 8, wobei die Lage der kleinsten Querschnittsfläche der Zwischeneinheit (13) in der Höhe von einer Zwischeneinheit (13) zur anderen kontinuierlich zu- oder abnimmt.

11. Internes Verstärkungselement (1) für einen thermoplastischen Tank nach einem der vorhergehenden Ansprüche, wobei die Dicke der Zwischeneinheit (13) mindestens 0,7 mm beträgt.

12. Internes Verstärkungselement für einen Thermoplasttank nach einem der vorhergehenden Ansprüche, wobei die mindestens n Zwischeneinheiten (13) und mindestens eines der mindestens zwei äußeren Teile (11, 12) aus unterschiedlichem Material hergestellt sind.

13. Internes Verstärkungselement (1) für einen thermoplastischen Tank nach dem vorhergehenden Anspruch, wobei die mindestens n Zwischeneinheiten (13) von mindestens einem der mindestens zwei äußeren Teile (11, 12) umspritzt werden, wobei die mindestens n Zwischeneinheiten (13) an ihren Enden mindestens ein Durchgangsloch (16) aufweisen, das zur Aufnahme eines verschweißten Teils der mindestens zwei äußeren Teile (11, 12) vorgesehen ist, wodurch eine mechanische Verbindung zwischen den mindestens n Zwischeneinheiten (13) und den mindestens zwei äußeren Teilen (11, 12) geschaffen wird.

14. Thermoplastischer Tank mit dem internen Verstärkungselement nach einem der vorhergehenden Ansprüche.

15. Verfahren zur Herstellung des internen Verstärkungselements nach einem der Ansprüche 1 bis 13, wobei das Verfahren einen Schritt des Spritzgießens von n Zwischeneinheiten, wobei n eine ganze Zahl größer oder gleich 3 ist, und einen Schritt des Umspritzens von mindestens einem äußeren Teil an den mindestens n Zwischeneinheiten umfasst.

16. Verfahren zur Herstellung eines thermoplastischen Tanks, der das interne Verstärkungselement nach einem der Ansprüche 1 bis 13 aufweist, wobei das Verfahren einen Schritt der Befestigung des internen Verstärkungselements an mindestens einer Wand des thermoplastischen Tanks umfasst.

## Revendications

1. Un élément interne de renfort (1) pour un réservoir thermoplastique, comprenant au moins deux parties externes (11, 12) prévues pour être soudées à une paroi du réservoir, lesdites parties externes (11, 12) étant reliées par au moins n unités intermédiaires (13) avec n étant un nombre entier supérieur ou égal à 3,
dans lequel lesdites unités intermédiaires (13) sont reliées ensemble par moins de 40 %, de préférence moins de 30 %, plus préférentiellement moins de 20 %, de leur longueur latérale et/ou de leur surface de face, **caractérisée en ce que** le rapport entre la plus petite surface de section d'au moins une des unités intermédiaires (13) et la surface d'au moins une partie externe (11, 12) prévue pour être en contact avec la paroi du réservoir est comprise entre 0.05% et 3%, de préférence entre 0.05% et 2%, plus préférentiellement entre 0.05% et 1%, et **en ce qu'**au moins deux des n unités intermédiaires (13) sont solidarisées par au moins un moyen de connexion (15) situé aux extrémités desdites au moins deux des n unités intermédiaires (13) et entre les extrémités desdites au moins deux des n unités intermédiaires (13) et d'au moins une des deux parties externes (11, 12), de préférence, lesdites au moins deux des n unités intermédiaires (13) et ledit au moins un moyen de connexion (15) constituent une structure monobloc.

2. L'élément interne de renfort (1) pour un réservoir thermoplastique selon la revendication 1, dans lequel la plus grande dimension de la section d'au moins une des unités intermédiaires (13) varie de plus de 50%, de préférence plus de 70% entre les extrémités (131, 132) des unités intermédiaires (13).

3. L'élément interne de renfort (1) d'un réservoir thermoplastique selon l'une quelconque des revendications précédentes, dans lequel la distance entre deux unités intermédiaires (13) adjacentes est constante.

4. L'élément interne de renfort (1) d'un réservoir thermoplastique selon la revendication 1 ou 2, dans lequel la distance entre deux unités intermédiaires (13) adjacentes est variable.

5. L'élément interne de renfort (1) pour un réservoir thermoplastique selon l'une quelconque des revendications précédentes, dans lequel le plus petit angle entre l'axe (135) défini par l'intersection d'un premier plan (136) comprenant la plus grande dimension de la section d'au moins une unité intermédiaire, ledit plan (136) étant perpendiculaire à la surface (137) de section de ladite unité intermédiaire, et un deuxième plan (115) défini par une surface de section d'au moins une partie externe, et l'axe (138) défini par la plus petite dimension de la section d'au moins une partie externe est compris entre 0° et 45°.

6. L'élément interne de renfort (1) pour un réservoir thermoplastique selon l'une quelconque des revendications 1 à 4, dans lequel l'axe d'intersection d'un premier plan (136) comprenant la plus grande dimension de la section d'au moins une unité intermédiaire (13) et un second plan (115) comprenant la plus petite dimension (138) de la section d'au moins une partie externe (11, 12), le premier plan (136) et le deuxième plan (115) étant perpendiculaires, et la plus petite dimension (138) de la section d'au moins une partie externe (11, 12) sont parallèles.

7. L'élément interne de renfort (1) pour une réservoir thermoplastique selon l'une quelconque des revendications 1 à 4, dans lequel l'axe d'intersection d'un premier plan (136) comprenant la plus grande dimension de la section d'au moins une unité intermédiaire (13) et un second plan (115) comprenant la plus petite dimension (138) de la section d'au moins une partie externe (11, 12), le premier plan (136) et le second (115) étant perpendiculaires, et la plus petite dimension (138) de la section d'au moins une partie externe (11, 12) sont perpendiculaires.

8. L'élément interne de renfort (1) pour un réservoir thermoplastique selon l'une quelconque des revendications 1 à 7, dans lequel la position de la plus petite surface de section de l'unité intermédiaire (13) en hauteur varie d'une unité à l'autre.

9. L'élément interne de renfort pour un réservoir thermoplastique selon la revendication 8, dans lequel la position de la plus petite surface de section de l'unité intermédiaire (13) en hauteur varie aléatoirement d'une unité à l'autre.

10. L'élément interne de renfort pour un réservoir thermoplastique selon la revendications 8, dans lequel la position de la plus petite surface de section de l'unité intermédiaire (13) en hauteur augmente ou diminue continuellement d'une unité intermédiaire (13) à l'autre.

11. L'élément interne de renfort (1) pour un réservoir thermoplastique selon l'une quelconque des revendications précédentes, dans lequel l'épaisseur de l'unité intermédiaire (13) est au moins égale à 0,7 mm.

12. L'élément interne de renfort pour un réservoir thermoplastique selon l'une quelconque des revendications précédentes, dans lequel lesdites au moins n unités intermédiaires (13) et au moins une desdites au moins deux parties externes (11, 12) sont en matériaux différents.

13. L'élément interne de renfort (1) pour un réservoir thermoplastique selon la revendication précédente, dans lequel lesdites au moins n unités intermédiaires (13) sont surmoulées par au moins une desdites au moins deux parties externes (11, 12), lesdites au moins n unités intermédiaires (13) comprenant au moins un trou traversant (16) à leurs extrémités prévues pour recevoir une partie fondue desdites au moins deux parties externes (11, 12) créant un lien mécanique entre lesdites au moins n unités intermédiaires (13) et lesdites au moins deux parties externes (11, 12).

14. Réservoir thermoplastique comprenant l'élément interne de renfort selon l'une quelconque des revendications précédentes.

15. Procédé de fabrication de l'élément interne de renfort selon l'une quelconque des revendications 1 à 13, ledit procédé comprenant une étape de moulage par injection de n unités intermédiaires avec n étant un nombre entier supérieur ou égal à 3 et une étape de surmoulage d'au moins une partie externe sur lesdites au moins n unités intermédiaires.

16. Procédé de fabrication d'un réservoir thermoplastique comprenant l'élément interne de renfort selon l'une quelconque des revendications 1 à 13, ledit procédé comprenant une étape de fixation de l'élément interne de renfort sur au moins une paroi du réservoir thermoplastique.
